## Europäisches Patentamt
## European Patent Office
## Office européen des brevets

(19)

(11) Publication number: **0 014 682**
**B1**

(12) **EUROPEAN PATENT SPECIFICATION**

(45) Date of publication of patent specification: **13.10.82**

(51) Int. Cl.³: **F 24 J 3/02**

(21) Application number: **80810031.7**

(22) Date of filing: **29.01.80**

(54) Absorbant tile for solar energy and sloping roof composed of such tiles.

(30) Priority: **31.01.79 CH 911/79**
**04.01.80 CH 22/80**

(43) Date of publication of application:
**20.08.80 Bulletin 80/17**

(45) Publication of the grant of the patent:
**13.10.82 Bulletin 82/41**

(84) Designated Contracting States:
**AT BE DE FR GB IT LU NL SE**

(56) References cited:
**BE - A - 869 110**
**CH - A - 581 812**
**CH - A - 584 386**
**DE - A - 1 804 776**
**DE - A - 2 309 307**
**DE - A - 2 558 612**
**DE - A - 2 640 333**
**DE - A - 2 702 939**
**DE - A - 2 729 313**
**DE - A - 2 805 555**

(73) Proprietor: **Elioform AG**
**FL-9495 Triesen (LI)**

(72) Inventor: **Brazzola, Luigi**
**CH-6874 Castel San Pietro (CH)**

(74) Representative: **Baggiolini, Raimondo**
**Racheli & Fiammenghi Via San Gottardo 15**
**CH-6900 Lugano (CH)**

(56) References cited:
**FR - A - 2 286 357**
**FR - A - 2 302 489**
**FR - A - 2 330 974**
**FR - A - 2 331 756**
**FR - A - 2 386 786**
**GB - A - 1 521 637**

Courier Press, Leamington Spa, England.

Absorbant tile for solar energy and sloping roof composed of such tiles

The present invention has for an object a solar energy absorptive tile useful for covering sloping roofs and a heat-absorptive roof made by such tiles.

At present, the panels used on roofs to collect solar energy with a view toward heating generally do comprise an insulated black background covered, through an interspace, by transparent tiles through which the sunrays reach the background heating it. The air flowing into said interspace absorbs the heat collected by the background and circulates to heat a heating plant, or to heat a liquid flowing into tubes connected to the heating plant (see FR—A—2,386,786).

Such known panels generally cannot ensure a sufficient raising of the temperature as it is required to heat domestic or industrial plants. The tile according to the present invention, on the contrary, allows to reach easily such high temperature, ensuring the correct functioning of any heating plants.

The tile according to the invention comprises at least one raised heat-collecting portion, a transparent cap to cover, insulate and protect the raised heat collecting portion of the tile; the tile presenting on its exposed surface one or more hollow protuberances interconnected by conduits with the raised heat collecting portion and with each other permitting circulation of the air from the hollow protuberances to said raised heat-collecting portion, said protuberances being so shaped as to reflect the sunrays toward said heat collecting raised portion, increasing the temperature thereof.

According to a preferred embodiment of the present invention, said heat-collecting raised portion presents a throat open upwardly, providing a seat for a blackened metallic tube through which passes the fluid to be heated.

Figures 1, 1a and 2 of the accompanying drawings show by way of example the first embodiment of the present invention.

Figures 3, 3a show a second embodiment.

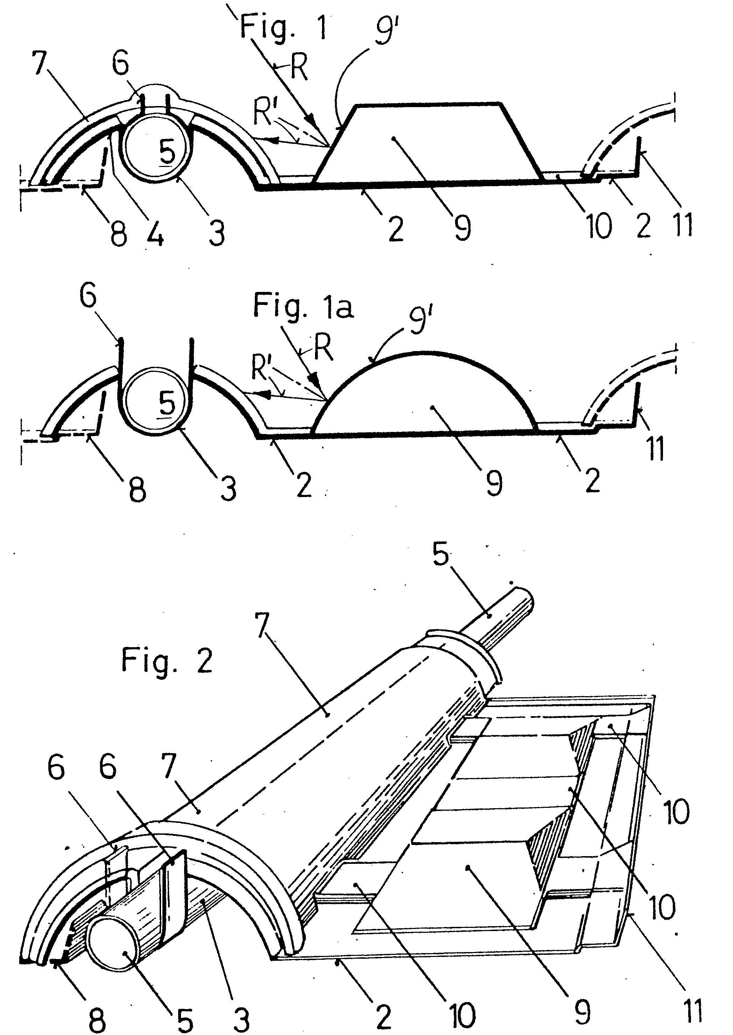

Figure 1 shows a transverse section of the tile according to the first embodiment. The metallic tile 2 is provided with a raised heat-collecting portion 4, covered by a transparent cap. The heat-collecting portion 4 presents a throat 3 in which is inserted a tube 5 retained by the clip spring 6. The next tile 8 is shown in broken line. At 9, there is shown a pyramidal protuberance corresponding to a lower cavity connected by the air conduits 10 to the inner of the elevated heat-collecting portion 4.

Figure 2 shows the same tile in perspective. The numbering of the same parts is identical to that of the preceding figure. There is shown at 11 the lateral edge overlain in its turn by the next tile not shown.

The reflecting portion 9' of the protuberance 9 reflects the sunrays arriving in the direction R on the heat-collecting portion 4 (direction R') so as to increase the temperature thereof.

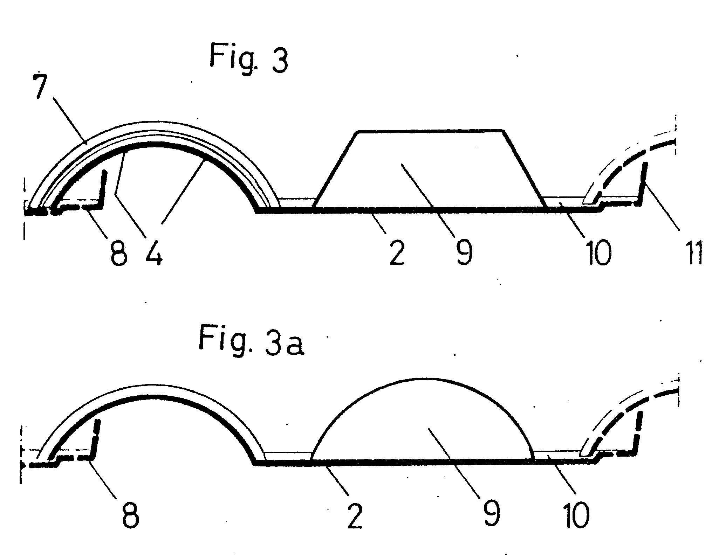

Figure 3 shows a second form of execution of the invention without throat 3 and without tube 5 but with raised portion 4 and transparent cap 7. The protuberances 9 are preferably of pyramidal or spherical shape (Fig. 3a). The hot air below protuberances 9 is carried by conduits 10 to the raised heat-collecting portion 4 and hence to an air-liquid heat pump.

The tube and the transparent cap are retained in position by an annular clip 6 comprising a spring which permits the emplacement or removal of the tube 5 and of the cap 7 by simple manual pressure or traction.

The tiles are disposed on a thermally-insulating panel which is secured to a flat surface resting on the structure carrying the roof. The tiles are nailed to this surface through eyelet holes which permit expansion and removal thereof. It is possible in this way to cover a sloping roof with an aesthetic effect comparable to that of an ordinary roof covered with traditional tiles.

At the upper and lower ends of the incline the tubes 5 are connected to a collector tube which thus integrates all the roof covering in the usual heating equipment for solar energy.

Modifications are foreseen as follows:

a) Along its edges the tile has channels and flanges 8, 11 which permit removing it by displacing it lengthwise of the plane of the slope without having to move the adjacent tiles.

b) The tile is applied to a panel of insulating material and is nailed on the surface of the roof lining by means of nails which pass through suitable eyeholes in the tile and the insulating panel.

c) Throat 3 of raised portion 4 is upwardly open so that the tube 5 disposed in the throat is seated and retained in the throat while being visible from above, said tube being blackened, fins or protuberances of the panel serving to retain the tube 5.

d) Each tube 5 is fixed in its throat 3 by a cement or substance having good thermal conductivity.

e) Tiles are interconnected and disposed as conventional tiles with the same aesthetic effect so that the throats for the tubes will be continuous from the bottom to the summit of the incline thereby to permit insertion of tubes interconnected endwise in conventional collector tubes and to integrate all the surface of the roof into the solar energy collecting equipment.

f) Tiles which are associated and form the covering are slightly elevated above the support surface, each tile having toward its base projecting portions which serve to space the panels from the support and which serve to facilitate heat exchange between the tile and the fluid circulating beneath it.

g) In the sapce between the assembly of tiles and the support surface circulates air whose heat is recuperated as by an ordinary air-liquid heat pump.

h) The transverse section of the tube (5) instead of being circular may be square, rectangular, trapezoidal, semicircular or triangular or even mushroom shaped with a head of large surface exposed to solar radiation.

i) The protuberances 9 have concave, spherical cap, pyramidal or truncated conical shape.

## Claims

1. Solar energy absorptive tile (2) for covering sloping roofs, comprising at least one raised heat-collecting portion (4), and characterized by a transparent cap (7) to cover, insulate and protect the raised heat-collecting portion of the tile; the tile presenting on its exposed surface one or more hollow protuberances (9) interconnected by conduits (10) with the raised heat collecting portion and with each other, permitting circulation of the air from the hollow protuberances to said raised heat-collecting portion (4), said protuberances being so shaped as to reflect the sunrays toward said heat-collecting raised portion (4) increasing the temperature thereof.

2. Tile according to claim 1, characterized by the fact that is metallic and blackened and that said heat-collecting raised portion (4) presents a throat (3) open upwardly, providing a seat for a blackened metallic tube (5) through which passes the fluid to be heated.

3. Tile according to claim 2, characterized by the fact that the tube or the transparent cap (7) is fixed in its final position by one or more semi-annular spring clips (6) inserted in the corresponding throats of the tile and so shaped as to provide free play and expansion and to make possible the emplacement and removal of the tube (5) and of the cap (7) by manual pressure or traction.

4. Tile according to claims 1 and 2, characterized by the fact that the tile has two or more heat-collecting raised portions (4) and two or more throats (3) to receive the tubes for the fluid to be heated with corresponding transparent caps (7).

5. Tile according to claim 2, characterized by the fact that the transverse section of the tube (5) is square, rectangular, trapezoidal, semicircular or triangular with the base uppermost exposed to the sunrays, or even mushroom-shaped with a head of large surface exposed to solar radiation.

6. Tile according to claim 2, characterized by the fact that each tube (5) is fixed in its throat (3) by a cement or substance having good thermal conductivity.

7. Tile according to claim 1, characterized by the fact that said protuberances (9) have concave, spherical cap, pyramidal or truncated conical shape.

8. A roof absorbing heat obtained by the union of several tiles according to claims 1 and 2, characterized by the fact that the tiles are disposed as conventional tiles with the same esthetic effect such that the throats for the tubes will be continuous from the base to the summit of the slope so as to permit the insertion of endwise interconnected tubes to the usual collector tubes and to integrate all the surface of the roof into the equipment for recovering solar energy.

9. A roof according to claim 8, characterized by the fact that the associated tiles forming the covering are slightly raised above the support surface, each tile toward the base projecting portions which serve to space the panels from the support and which serve to facilitate heat exchange between the tile and the fluid circulating beneath it.

10. A roof according to claims 8 and 9, characterized by the fact that in the space between the tile assembly and the support surface circulates air whose heat is recuperated as by a normal heat pump.

11. A roof according to claims 8 and 10, characterized by the fact that several tiles are interconnected so as to form a unit facilitating emplacement of the assembly.

## Revendications

1. Tuile (2) absorbant l'énergie solaire pour couvrir des toits inclinés comprenant au moins une partie (4) surélevée collectrice de chaleur et caractérisé par une chape transparente (7) pour recouvrir, isoler et protéger la partie surélevée collectrice de chaleur de la tuile, cette tuile présentant sur sa surface exposée une ou plusieurs protubérances creuses (9) reliées par des conduits (10) avec la partie surélevée collectrice de chaleur et les unes avec les autres en permettant la circulation de l'air des protubérances creuses à ladite partie surélevée collectrice de chaleur (4), lesdites protubérances étant d'une forme telle qu'elles réfléchissent le rayonnement solaire vers ladite partie surélevée collectrice de chaleur (4) en élevant la température de cette partie.

2. Tuile selon la revendication 1, caractérisée par le fait qu'elle est en métal et noircie et que ladite partie surélevée collectrice de chaleur (4) présente une gorge (3) ouverte vers le haut constituant un siège pour un tube métallique noirci (5) à travers lequel circule le fluide à chauffer.

3. Tuile selon la revendication 2, caractérisée par le fait que le tube ou la chape transparente est fixé dans sa position finale par une ou plusieurs pinces à ressort semi-annulaires (6) insérées dans les gorges correspondantes de la tuile et de forme telle qu'elles permettent un libre jeu et un dilatation et qu'elles rendent possibles la mise en place et l'enlèvement du tube (5) et de la chape (7) par pression ou traction manuelle.

4. Tuile selon les revendications 1 et 2, caractérisée par le fait que la tuile présente deux ou plusieurs parties surélevées collectrices de chaleur (4) et deux ou plusieurs gorges (3) pour recevoir les tubes pour le fluide à chauffer avec des chapes transparentes correspondantes (7).

5. Tuile selon la revendication 2, caractérisée par le fait que la section transversale du tube (5) est carrée, rectangulaire, trapézoïdale, semi-circulaire ou triangulaire avec sa face supérieure exposée au rayonnement solaire ou même en forme de champignon avec une tête de grande surface exposée au rayonnement solaire.

6. Tuile selon la revendication 2, caractérisée par le fait que chaque tube (5) est fixé dans sa gorge (3) par un ciment ou une substance ayant une bonne conductibilité thermique.

7. Tuile selon la revendication 1, caractérisée par le fait que lesdites protubérances (9) ont une forme concave, en calotte sphérique, pyramidale ou en cône tronqué.

8. Toit absorbant la chaleur obtenu par l'union de plusieurs tuiles selon les revendications 1 et 2, caractérisé par le fait que les tuiles sont disposées comme des tuiles traditionnelles avec le même effet esthétique de façon que les gorges pour les tubes soient continues de la base au faîte de la pente de façon à permettre l'insertion de tubes raccordées bout à aux tubes collecteurs habituels et à intégrer toute la surface du toit dans l'équipement pour récupérer l'énergie solaire.

9. Toit selon la revendication 8, caractérisé par le fait que les tuiles associées formant la couverture sont légèrement surélevées au-dessus de la surface porteuse, chaque tuile vers la base présentant des parties saillantes qui servent à écarter les tuiles du support et qui servent à faciliter l'échange de chaleur entre la tuile et le fluide circulant au-dessous d'elle.

10. Toit selon les revendications 8 et 9, caractérisé par le fait que, dans l'espace entre le montage de tuile et la surface portante, circule de l'air dont la chaleur est récupérée par une pompe à chaleur normale.

11. Toit selon les revendications 8 et 10, caractérisé par le fait que plusieurs tuiles sont reliées entre elles de façon à former un ensemble facilitant la mise en place de l'ensemble.

## Patentansprüche

1. Sonnenenergie absorbierender Dachziegel für Schrägdächer mit mindestens einem erhabenen wärmesammelnden Abschnitt, gekennzeichnet durch eine transparente Kappe (7) zur Abdeckung, zur Isolierung und zum Schutz des erhabenen wäremsammelnden Abschnittes des Dachziegels, wobei der Dachziegel auf der außen zu liegen kommenden Fläche ein oder mehrere hohle Vorsprünge (9) aufweist, die mit dem erhabenen wärmesammelnden Abschnitt und untereinander durch Leitungen (10) für eine Bewegung der Luft von den hohlen Vorsprüngen zu dem erhabenen wärmesammelnden Abschnitt (4) verbunden sind und die derart ausgebildet sind, dass die Sonnenstrahlen zu dem erhabenen wärmesammelnden Abschnitt (4) zu dessen Temperaturerhöhung reflektiert werden.

2. Dachziegel nach Anspruch 1, dadurch gekennzeichnet, dass er metallisch und geschwärzt ist und dass der erhabene wärmesammelnde Abschnitt (4) eine nach oben offene Kehle (3) aufweist, die einen Sitz für ein geschwärztes metallisches Rohr (5) bildet, durch das die zu erhitzende Flüssigkeit strömt.

3. Dachziegel nach Anspruch 2, dadurch gekennzeichnet, dass das Rohr oder die transparente Kappe (7) in der endgültigen Lage mit Hilfe eines oder mehrerer halbringförmiger Federclips (6) befestigt ist, die in die entsprechenden Kehlen des Dachziegels eingesetzt sind, ein Spiel aufweisen und sich dehnen können und ein Einsetzen und ein Entfernen des Rohrs (5) und der Kappe (7) durch manuellen Druck oder Zug ermöglichen.

4. Dachziegel nach den Ansprüchen 1 und 2, dadurch gekennzeichnet, dass zwei oder mehr erhabene wärmesammelnde Abschnitte (4) und zwei oder mehr Kehlen (3) zur Aufnahme der Rohre für die zu erhitzende Flüssigkeit mit den zugehörigen transparenten Kappen (7) versehen sind.

5. Dachziegel nach Anspruch 2, dadurch gekennzeichnet, dass das Rohr (5) einen quadratischen, rechteckigen, trapezförmigen, halbkreisförmigen oder kreisförmigen Querschnitt aufweist, wobei die Basislinie oben liegt und den Sonnenstrahlen zugewandt ist, oder dass der Querschnitt pilzförmig gestaltet ist mit einem der Sonnenenergie ausgesetzten Kopf von grosser Oberfläche.

6. Dachziegel nach Anspruch 2, dadurch gekennzeichnet, dass jedes Rohr 5 in der Kehle (3) mit Hilfe von Zement oder einer Substanz mit guter thermischer Leitfähigkeit befestigt ist.

7. Dachziegel nach Anspruch 1, dadurch gekennzeichnet, dass die Vorsprünge (9) eine konkave, sphärische, pyramidische oder kegelstumpfförmige Form haben.

8. Sonnenenergie absorbierendes Dach, zusammengesetzt aus mehreren Ziegeln gemäss den Ansprüchen 1 und 2, dadurch gekennzeichnet, dass die Dachziegel wie herkömmliche Ziegel mit dem gleichen ästhetischen Effekt zum Dachdecken verwendet werden derart, dass die Kehlen für die Rohre vom Fuss bis zur Spitze des Schrägdaches durchgehen, um das Einsetzen von an den Enden miteinander zu gewöhnlichen Sammelrohren verbundenen Rohren zu ermöglichen und die gesamte Oberfläche des Daches in die Ausrüstung für die Ausbeutung der Sonnenenergie zu integrieren.

9. Dach nach Anspruch 8, dadurch gekennzeichnet, dass die miteinander in Verbindung stehenden und die Abdeckung bildenden Ziegel ein wenig über die Stützfläche angehoben sind, wobei jeder Ziegel zu seiner Basis hin vorspringende Abschnitte aufweist, die dazu dienen, die Ziegel von der Abstützung auf Abstand zu halten, und die außerdem den Wärmeaustausch zwischen dem Ziegel und der darunter zirkulierenden Flüssigkeit erleichtern.

10. Dach nach den Ansprüchen 8 und 9, dadurch gekennzeichnet, dass im Raum zwischen der Ziegelanordnung und der Stützfläche Luft zirkuliert, deren Wärme mittels einer normalen Wärmepumpe zurückgewonnen wird.

11. Dach nach den Ansprüchen 8 und 10, dadurch gekennzeichnet, dass mehrere Ziegel derart miteinander verbunden sind, dass sie eine das Anbringen der Anordnung erleichternde Einheit bilden.

0 0 14 682

Fig. 1

Fig. 1a

Fig. 2

## Fig. 3

## Fig. 3a